Europäisches Patentamt

European Patent Office

Office européen des brevets

(19)

(11) Numéro de publication : **0 288 873 B1**

## (12) FASCICULE DE BREVET EUROPEEN

(45) Date de publication du fascicule du brevet :
24.07.91 Bulletin 91/30

(51) Int. Cl.⁵ : **A01G 9/10, B65G 47/90**

(21) Numéro de dépôt : **88106198.0**

(22) Date de dépôt : **19.04.88**

(54) **Dispositif de préhension et de transfert de plants en mottes.**

(30) Priorité : **28.04.87 FR 8706031**

(43) Date de publication de la demande :
**02.11.88 Bulletin 88/44**

(45) Mention de la délivrance du brevet :
**24.07.91 Bulletin 91/30**

(84) Etats contractants désignés :
**AT BE CH DE ES FR GB GR IT LI LU NL SE**

(56) Documents cités :
**FR-A- 2 578 142**
**US-A- 4 130 314**

(73) Titulaire : **GERPLANT AUTOMATION**
**16, Rue Eugénie Cotton**
**F-76410 Tourville-la-Rivière (FR)**

(72) Inventeur : **Germaine, Michel**
**3 Sente des Bûcherons**
**F-76350 Oissel (FR)**

(74) Mandataire : **Casalonga, Axel et al**
**BUREAU D.A. CASALONGA - JOSSE**
**Morassistrasse 8**
**W-8000 München 5 (DE)**

**Description**

La présente invention se rapporte à un dispositif de préhension et de transfert de plants en mottes, notamment en vue du rempotage ou de la plantation.

Par la demande de brevet WO 86/01975 (PCT/FR85/00274), on connaît un dispositif de préhension et de transfert comprenant un support déplaçable entre une position de préhension d'une motte et une position de rempotage ou de plantation de la motte, deux éléments de préhension de forme allongée montés l'un à distance et en regard de l'autre de façon déplaçable sur ledit support, leurs extrémités libres étant tournées vers la bas, des moyens de manoeuvre agissant sur les autres extrémités des éléments de préhension pour déplacer ces derniers, par rapport au support, conjointement en va-et-vient vers le bas et vers le haut entre une position haute inactive et une position basse active de préhension, ainsi que des moyens pour le guidage des éléments de préhension sur le support de manière qu'en position basse, les extrémités libres des éléments de préhension soient plus proches l'une de l'autre qu'en position haute.

Dans ce dispositif connu, les éléments de préhension sont constitués par deux aiguilles convergeant vers le bas, qui sont enfoncées vers le bas dans une motte suivant leurs axes pour saisir la motte, le support se trouvant en position de préhension. Le support avec les aiguilles et la motte est ensuite amené en position de rempotage ou de plantation et les aiguilles sont alors retirées vers le haut suivant leurs axes pour libérer la motte.

Ce dispositif donne de très bons résultats sur des mottes constituées par des matériaux cohérents, notamment de laine de roche utilisée pour la culture dite hors sol. Par contre, il s'avère que ce dispositif ne donne pas entière satisfaction sur des mottes en des matériaux plus friables, par exemple du terreau, et plus particulièrement dans le cas où les racines du plant sont bien développées et ont tendance à adhérer aux alvéoles dans lesquelles se trouvent les mottes. Il arrive dans ce cas que la préhension des mottes ne s'effectue pas à 100%, ou que des mottes soient abîmées.

La présente invention a pour objet un dispositif de préhension et de transfert de plants en mottes convenant plus particulièrement à des mottes en matériaux friables et/ou des mottes portant des plants à racines adhérant aux alvéoles contenant les mottes.

Sur le dispositif de préhension et de transfert conforme à l'invention, les éléments de préhension et les moyens de guidage des éléments de préhension sont conçus de manière que les éléments de préhension soient sensiblement parallèles en position haute et restent sensiblement parallèles pendant la majeure partie du déplacement vers le bas et vers le haut, et les éléments de préhension comportent des moyens coopérant avec les moyens de guidage à la fin du mouvement de descente et au début du mouvement de montée de manière que leurs extrémités libres soient rapprochées l'une de l'autre uniquement vers la fin du mouvement de descente pour exercer un effet de pincement sur la motte et que leur extrémités libres soient écartées l'une de l'autre uniquement au début du mouvement de montée pour supprimer cet effet de pincement.

Grâce à ce pincement du plant par les éléments de préhension à la fin du mouvement de descente, la motte est saisie de façon plus efficace que dans le cas d'aiguilles simplement enfoncées de façon convergente dans la motte, ce qui réduit considérablement le risque qu'une motte reste accrochée dans son alvéole ou se trouve abîmée lors de son mouvement d'extraction hors de l'alvéole à la suite de la préhension.

Chaque élément de préhension peut par exemple être constitué par une aiguille ou un élément analogue de section sensiblement circulaire, ou par plusieurs aiguilles parallèles.

Toutefois, pour améliorer encore la préhension, il est avantageux que chaque élément de préhension soit constitué d'un élément plat en forme de lame, de préférence effilé à son extrémité libre. La forme plate d'un élément de préhension améliore le contact de l'élément de préhension avec la motte, et le fait que l'élément plat soit effilé à son extrémité libre fait qu'il pénètre néanmoins facilement dans la motte en écartant les racines sans les endommager de façon notable, et sans endommager la motte.

Suivant un mode de réalisation de l'invention, chaque élément de préhension comporte, entre ses deux extrémités, un bossage en saillie vers l'extrémité, c'est-à-dire en opposition à l'élément de préhension associé, et présente une forme sensiblement rectiligne entre ledit bossage et son extrémité libre. Les moyens de guidage de l'élément de préhension comprennent un guide extérieur fixe disposé sur le support de manière que la face extérieure de chaque élément de préhension porte toujours contre ledit guide pendant le déplacement de l'élément de préhension et que le bossage de chaque élément de préhension rencontre ledit guide à la fin du mouvement de descente de l'élément de préhension et rapproche alors l'extrémité libre de ce dernier de l'extrémité libre de l'élément de préhension associé.

Il suffit donc d'animer les éléments de préhension d'un mouvement vertical de va-et-vient pour que le mouvement de pincement des éléments de préhension se produise à la fin du mouvement de descente, et le mouvement correspondant d'écartement des éléments de préhension se produise au début du mouvement de remontée, automatiquement grâce à la coopération du bossage de chaque élément de préhension avec le guide extérieur associé.

Pour maintenir chaque élément de préhension en contact avec son guide extérieur, il est possible de réaliser l'élément de préhension à partir d'un matériau élastique et de le monter, à son extrémité opposée à l'extrémité libre, de manière qu'il soit en permanence maintenu élastiquement en contact avec ledit guide.

Pour supprimer ou pour le moins réduire le frottement et l'usure que chaque élément de préhension élastique subit au contact de son guide extérieur, et pour améliorer l'effet de pincement et réduire les risques d'écartement par élasticité des éléments de préhension en cas d'efforts entre une motte et les éléments de préhension élastiques pinçant une telle motte, il est avantageux de réaliser chaque élément de préhension en un matériau rigide de manière qu'il présente intérieurement un creux à l'endroit dudit bossage extérieur, de prévoir une articulation entre chaque élément de préhension et les moyens de manoeuvre des éléments de préhension, et de compléter le guide fixe extérieur de chaque élément de préhension par un guide fixe disposé sur le support de manière que la face intérieure de chaque élément de préhension, tourné vers l'élément de préhension associé, porte également toujours contre ledit guide intérieur.

Ainsi, chaque élément de préhension est guidé à la fois extérieurement et intérieurement, ce qui assure de façon positive les mouvements de pincement et d'écartement des éléments de préhension associés sous l'action du seul mouvement de descente et de montée de ces éléments par les moyens de manoeuvre.

Les moyens de manoeuvre des éléments de préhension peuvent être avantageusement constitués par un élément de manoeuvre commun, de préférence un vérin pneumatique, agissant sur les deux éléments de préhension associés, de préférence par l'intermédiaire d'une monture commune sur laquelle les deux éléments de préhension sont articulés.

Afin de prévenir les risques de coincement des feuilles des plants entre les éléments de préhension et les moyens de guidage de ces derniers, il est avantageux que le dispositif de préhension comporte une tôle de garde recouvrant les moyens de guidage, sans gêner le mouvement des éléments de préhension.

En se référant au dessin schématique annexé, on va décrire ci-après plus en détail un mode de réalisation illustratif et non limitatif du dispositif conforme à l'invention ; sur le dessin :

la figure 1 est une vue de face d'un dispositif de préhension conforme à l'invention, les éléments de préhension se trouvant en position inactive ;
la figure 2 est une vue correspondant à celle de la figure 1, montrant les éléments de préhension en position active ;
la figure 3 est une vue de côté du dispositif de préhension, les éléments de préhension se trouvant à la position active selon la figure 2.

Le dispositif de préhension 1 tel qu'illustré par les dessins est destiné à saisir une motte de terreau ou d'un matériau analogue portant un plant non représenté et disposé par exemple dans un alvéole 2 d'une plaque à alvéoles 3 telle qu'utilisée de façon usuelle dans le domaine horticole et maraîcher, chaque alvéole 2 recevant une motte servant de support de germination pour une semence et de support de croissance pour le plan résultant de la germination de cette semence. Le dispositif de préhension 1 sert par exemple à transférer la motte de la plaque 3 dans un autre support de culture, par exemple dans un godet ou pot de plus grande taille (rempotage), ou dans un terrain de culture en plein champ (plantation).

Pour plus de clarté, on n'a pas représenté la motte à saisir, ni le plant porté par cette dernière.

Le dispositif de préhension 1 comprend un support 4 coudé, par exemple en tôle, dont l'aile supérieure 5 horizontale porte, sur le dessus, un vérin pneumatique 6 dont la tige de piston 7 traverse l'aile 5 vers le bas. Sur l'extrémité libre de la tige de piston 7 est vissée une monture 8 portant deux lames 9 plates reliées de façon articulée à deux côtés opposés de la monture 8. Dans l'exemple représenté, la monture 8 est traversée par un trou horizontal recevant une vis 10 qui passe également dans des trous prévus à une extrémité des lames 9, un écrou 11 autofreiné étant engagé sur l'extrémité libre de la vis 10 sans être serré contre la monture 8, de manière que les deux lames 9 se trouvent articulée de façon pendulaire, face à face, sur les deux côtés opposés de la monture 8.

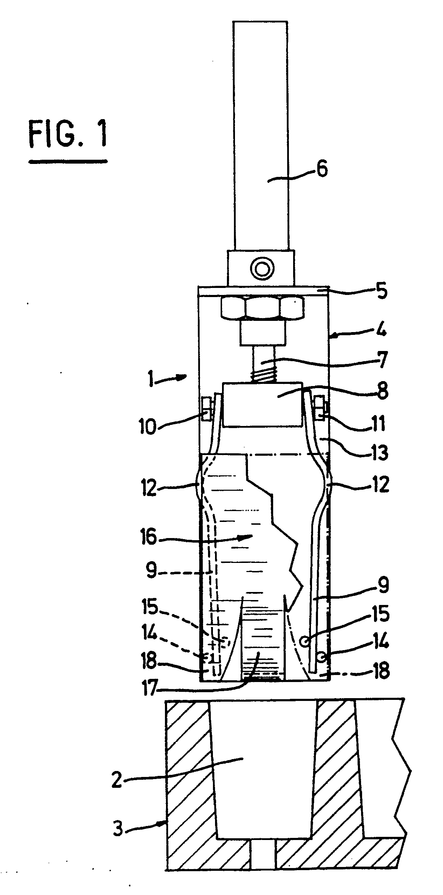

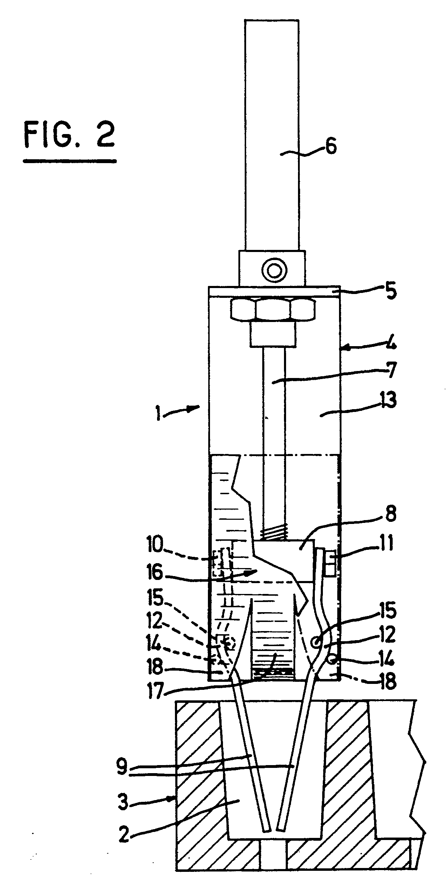

Tel que cela apparaît sur les figures 1 et 2, chaque lame 9 présente une forme générale rectiligne, mais comporte, à faible distance en dessous de son extrémité supérieure, un bossage 12 tourné vers l'extérieur, c'est-à-dire en opposition à l'autre lame 9, et un creux correspondant sur la face intérieure.

Au voisinage de son extrémité inférieure, l'aile verticale 13 du support 4 comporte deux paires de tiges de guidage 14, 15 faisant saillie à angle droit sur l'aile 13 du support 4 vers le même côté que l'aile 5. Les deux tiges de guidage 14, 15 de chaque paire sont disposées de manière à encadrer et à guider une lame 9 du côté extérieur et du côté intérieur, la tige de guidage 14 extérieure de chaque paire se trouvant en contact avec la face extérieure de la lame 9 et la tige de guidage 15 en contact avec la face intérieure de cette même lame. La position des tiges de guidage 14, 15 de chaque paire est telle que lorsque les lames 9 se trouvent en position haute, c'est-à-dire en position inactive, au-dessus d'un alvéole 2 (figure 1), les lames 9 se trouvent légèrement décalées vers l'intérieur par rapport au prolongement vers le haut des parois latérales opposées de l'alvéole 2, et soient orientées de façon sensiblement parallèle auxdites parois de l'alvéole.

Enfin, le dispositif de préhension comprend une tôle de garde 16 qui s'étend en avant de l'aile 13 du support 4 de manière à recouvrir en particulier les tiges de guidage 14, 15. Cette tôle de garde 16 est fixée, à son extrémité inférieure, à l'extrémité inférieure de l'aile 13 du support 4 par une branche médiane 17, et présente deux oreilles latérales 18 qui recouvrent les tiges de guidage 14, 15.

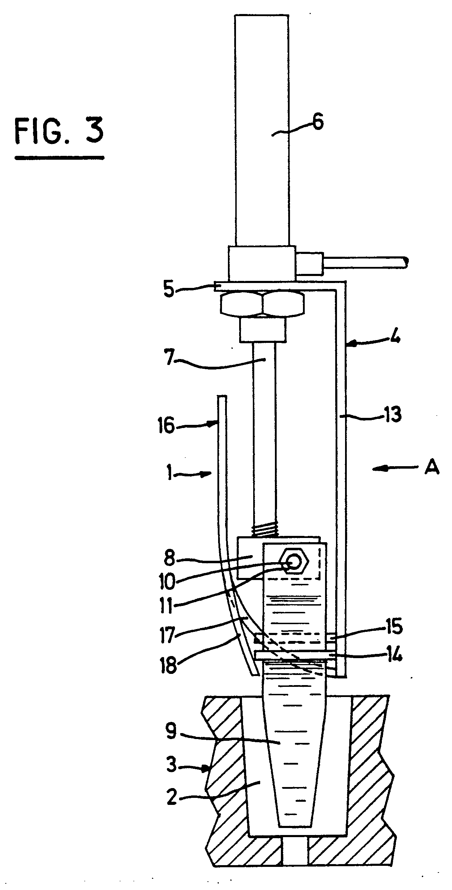

Pour saisir un plant dans un alvéole 2 de la plaque 3 et le transférer, on place le dispositif de préhension 1, les lames 9 étant retirées vers le haut comme indiqué sur la figure 1, au-dessus de la plaque 3, en arrière de l'alvéole 2 en question, et on l'amène ensuite horizontalement dans le sens de la flèche A sur la figure 3, la tôle de garde 16 tournée vers l'avant, à la position de préhension de la motte, dans laquelle les lames 9 sont situées au-dessus de l'alvéole contenant la motte à saisir. Ce mouvement d'approche horizontal a pour effet que les feuilles du plant à saisir sont repoussées par la tôle de garde 16 et ne risquant pas d'être écrasées comme ce serait le cas si le dispositif de préhension 1 était simplement abaissé au-dessus de l'alvéole 2 contenant le plant à saisir.

On actionne ensuite le vérin 6 pour faire descendre les lames 9 dans l'alvéole 2. Pendant ce mouvement de descente, les lames 9 s'enfoncent d'abord dans la motte contenue dans l'alvéole 2, au voisinage du bord extérieur de la motte, en suivant un trajet sensiblement rectiligne et sensiblement parallèle aux parois opposées de l'alvéole 2. Lorsque les extrémité libres des lames 9 sont arrivées à faible distance au-dessus du fond de l'alvéole 2, les bossages 12 des lames 9 entrent en contact avec les tiges de guidage 14, ce qui a pour effet de rapprocher l'une de l'autre les deux lames 9 qui exercent ainsi un effet de pincement sur la motte (figure 2).

La motte étant ainsi pincée par les deux lames 9 arrivées à la fin de leur mouvement de descente, on déplace vers le haut l'ensemble du dispositif de préhension 1 pour retirer de l'alvéole 2 la motte accrochée aux lames 2, et on transfère ensuite le dispositif de préhension 1 avec la motte à un emplacement de réception en vue du rempotage du plant ou de sa plantation.

Lorsque le plant en motte toujours suspendu aux lames 9 a été amené en position de rempotage ou de plantation et enfoncé dans le milieu de culture dans lequel il doit être rempoté ou planté, on actionne le vérin 6 en sens opposé pour faire remonter les lames 9. Au début de ce mouvement de remontée, les lames 9 se trouvent d'abord écartées l'une de l'autre sous l'effet des tiges de guidage intérieures 15 lorsque les bossages 12 des lames 9 quittent les tiges de guidage extérieures 14, avant que les paires de tiges de guidage 14, 15, en coopérant avec la partie rectiligne des lames 9, guident ensuite ces dernière de façon rectiligne pendant la partie restante du mouvement de remontée jusqu'à la position suivant la figure 1.

Les mouvements de l'ensemble du dispositif de préhension 1 entre la position de préhension et la position de réception, et inversement, s'effectuent par des moyens non représentés sur lesquels l'ensemble du dispositif de préhension est monté par le support 4. Ces moyens ne sont pas représentés car ils n'entrent pas dans le cadre de la présente invention.

Il y a lieu de noter que le dispositif de préhension tel que décrit et illustré peut recevoir de nombreuses modifications et variantes dans le cadre de l'invention.

Ainsi, chaque lame 9 peut être remplacée par exemple par une aiguilles ou même par plusieurs aiguilles parallèles. En outre, au lieu d'être articulées sur une monture 8 commune, les deux lames 9 pourraient être réalisées en un matériau élastique et être fixées rigidement à une monture 8 de manière à être sollicitées élastiquement dans le sens de l'écartement des deux lames 9 l'une de l'autre. Dans ce cas, il suffirait de prévoir des tiges de guidage extérieures 14 pour produire le mouvement de pincement, alors que le mouvement d'écartement des lames 9 s'effectuerait par l'élasticité de ces dernières, sans l'aide des tiges de guidage.

Il serait également possible, dans ce cas, de réaliser les deux lames 9 d'une seule pièce en forme de U.

## Revendications

1. Dispositif de préhension et de transfert de plants en mottes, en vue du rempotage ou de la plantation, comprenant un support (4) déplaçable entre une position de préhension d'une motte et une position de rempotage ou de plantation de la motte, deux éléments de préhension (9) de forme allongée, montés à distance et en regard l'un de l'autre de façon déplaçable sur ledit support, leurs extrémités libres étant tournées vers le bas, des moyens de manoeuvre (6) agissant sur les autres extrémités des éléments de préhension pour déplacer ces derniers, par rapport au support, conjointement et en va-et-vient vers le bas et vers le haut entre une position haute inactive et une position basse active de préhension, et des moyens (14, 15) pour le guidage des éléments de préhension sur le support de manière qu'en position basse, les extrémités libres des éléments soient plus proches l'une de l'autre qu'en position haute, caractérisé par le fait que les éléments de préhension (9) et les moyens de guidage (14, 15) des éléments de préhension sont conçus de manière que pendant la majeure partie de leur déplacement vers le bas et vers le haut, les extrémités libres des éléments de préhension conservent sensiblement le même écartement et que les éléments de préhension comportent des moyens (12) coopérant avec les moyens de guidage (14, 15) à la fin du mouvement de descente et au début du mouvement de montée de manière que leurs extrémités libres soient rapprochées l'une de l'autre uniquement vers la fin du mouvement de descente en vue du pincement de la motte, et écartées l'une de l'autre uniquement au début du mouvement de montée, en vue de la suppression du pincement.

2. Dispositif suivant la revendication 1, caractérisé par le fait que chaque élément de préhension (9) comporte, entre ses deux extrémités, un bossage (12) en saillie vers l'extérieur en opposition à l'élément de préhension associé et présente une forme sensiblement rectiligne entre ledit bossage et l'extrémité libre, et que les moyens de guidage comprennent, pour chaque élément de préhension, un guide extérieur fixe (14) disposé sur le support (4) de manière que la face extérieure de chaque élément de préhension (9) porte toujours contre ledit guide pendant le mouvement de montée et de descente de l'élément de préhension et que le bossage de l'élément de préhension rencontre ledit guide à la fin du mouvement de descente de l'élément de préhension et rapproche alors l'extrémité libre de ce dernier de l'extrémité libre de l'élément de préhension associé.

3. Dispositif suivant la revendication 1 ou 2, caractérisé par le fait que chaque élément de préhension est constitué par une lame.

4. Dispositif suivant la revendication 3, caractérisé par le fait que chaque lame est effilée à son extrémité libre.

5. Dispositif suivant la revendication 4, caractérisé par le fait que les deux lames sont reliées à une monture commune.

6. Dispositif suivant la revendication 2, caractérisé par le fait que chaque élément de préhension est constitué par un matériau élastique et porte élastiquement contre ledit guide extérieur.

7. Dispositif suivant la revendication 2, caractérisé par le fait que chaque élément de préhension est constitué par un matériau rigide et présente intérieurement un creux à l'endroit dudit bossage, qu'une articulation (10, 11) est prévue entre chaque élément de préhension et les moyens de manoeuvre (6), et que les moyens de guidage comprennent, en outre, un guide fixe intérieur (15) disposé sur le support (4) de manière que la face intérieure de chaque élément de préhension porte toujours contre ledit guide intérieur.

8. Dispositif suivant l'une quelconque des revendications précédentes, caractérisé par le fait qu'il comprend une tôle de garde (16) recouvrant les moyens de guidage (14, 15).

**Patentansprüche**

1. Greif- und Umsetzvorrichtung für Pflanzenballen, um diese einzutopfen oder auszupflanzen, die aufweist : einen zwischen einer Greifstellung für einen Ballen und einer Eintopf- oder Auspflanzstellung für den Ballen beweglichen Träger (4), zwei längliche Greifelemente (9), die an dem Träger im Abstand voneinander und einander gegenüberstehend verstellbar gelagert sind, wobei ihre freien Enden nach unten weisen, Betätigungsmittel (6), die auf die anderen Enden der Greifelemente einwirken, um diese bezüglich des Trägers gemeinsam nach unten und nach oben zwischen einer oberen unwirksamen Stellung und einer unteren wirksamen Greifstellung hin- und herzubewegen, und Mittel (14, 15), um die Greifelemente auf dem Träger derart zu führen, daß in der unteren Stellung die freien Enden der Elemente näher beieinander stehen als in der oberen Stellung, dadurch gekennzeichnet, daß die Greifelemente (9) und die Führungsmittel (14, 15) der Greifelemente derart ausgebildet sind, daß während des größten Teils ihrer nach unten und nach oben gerichteten Bewegung die freien Enden der Greifelemente im wesentlichen den gleichen Abstand voneinander beibehalten, und daß die Greifelemente Mittel (12) aufweisen, die mit den Führungsmitteln (14, 15) am Ende der Abwärtsbewegung und zu Beginn der Aufwärtsbewegung derart zusammenwirken, daß die freien Enden (der Greifelemente) lediglich am Ende der Abwärtsbewegung zum Festklemmen des Ballens aneinander angenähert und lediglich zu Beginn der Aufwärtsbewegung zur Vermeidung dieses Festklemmens voneinander weiter beabstandet sind.

2. Vorrichtung nach Anspruch 1, dadurch gekennzeichnet, daß jedes Greifelement (9) zwischen seinen beiden Enden einen nach außem dem jeweils zugeordneten Greifelement gegenüberliegend vorragenden Höcker (12) aufweist und zwischen diesem Höcker und seinem freien Ende eine im wesentlichen gerade Gestalt hat und daß die Führungsmittel für jedes Greifelement eine außenliegende feststehende Führung (14) aufweisen, die auf dem Träger (4) derart angeordnet ist, daß die Außenseite jedes Greifelementes (19) während der Aufwärts- und der Abwärtsbewegung des Greifelementes dauernd an dieser Führung anliegt und daß der Höcker des Greifelementes auf die Führung am Ende der Abwärtsbewegung des Greifelementes aufläuft und sodann dessen freies Ende an das freie Ende des zugeordneten Greifelementes annähert.

3. Vorrichtung nach Anspruch 1 oder 2, dadurch gekennzeichnet, daß jedes Greifelement durch eine Klinge gebildet ist.

4. Vorrichtung nach Anspruch 3, dadurch gekennzeichnet, daß jede Klinge an ihrem freien Ende verjüngt ist.

5. Vorrichtung nach Anspruch 4, dadurch gekennzeichnet, daß die beiden Klingen mit einer gemeinsamen Halterung verbunden sind.

6. Vorrichtung nach Anspruch 2, dadurch gekennzeichnet, daß jedes Greifelement aus einem elastischen Material besteht und elastisch gegen die äußere Führung drückt.

7. Vorrichtung nach Anspruch 2, dadurch gekennzeichnet, daß jedes Greifelement aus einem starren Material besteht und im Inneren an der Stelle des Höckers einen Hohlraum aufweist, daß zwischen jedem Greifelement und den Betätigungsmitteln (6) ein Gelenk (10, 11) vorgesehen ist, und daß die Führungsmittel außerdem eine feststehende innenliegende Führung (15) aufweisen, die auf dem Träger (4) derart angeordnet ist, daß die Innenseite jedes Greifelementes dauernd an der jeweiligen inneren Führung anliegt.

8. Vorrichtung nach einem der vorhergehenden Ansprüche, dadurch gekennzeichnet, daß sie ein die Führungsmittel (14, 15) abdeckendes Schutzblech (16) aufweist.

## Claims

1. Device for gripping and transferring plant balls, with a view to repotting or planting, comprising a support (4) which can be displaced between a position for gripping a ball and a position for repotting or planting the ball, two gripping elements (9) of elongated form, mounted at a distance from each other and opposite each other in a displaceable manner on the said support, their free ends pointing downwards, manoeuvring means (6) acting on the other ends of the gripping elements in order to displace the latter, with respect to the support, jointly and in a back-and-forth downwards and upwards movement between an upper inactive position and a lower active gripping position, and means (14, 15) for guiding the gripping elements on the support in such a way that, in the lower position, the free ends of the elements are closer together than in the upper position, characterised in that the gripping elements (9) and the guide means (14, 15) of the gripping elements are designed in such a way that, over the majority of their downwards and upwards displacement, the free ends of the gripping elements preserve substantially the same spacing, and that the gripping elements comprise means (12) interacting with the guide means (14, 15) at the end of the descending movement and at the beginning of the rising movement in such a way that their free ends are brought closer to each other only towards the end of the descending movement with a view to clasping the ball, and are spaced apart from each other only at the beginning of the rising movement, with a view to eliminating the clasping.

2. Device according to Claim 1, characterised in that each gripping element (9) comprises, between its two ends, a protrusion (12) projecting outwards, away from the associated gripping element, and has a substantially rectilinear shape between the said protrusion and the free end, and in that the guide means comprise, for each gripping element, a fixed outer guide (14) arranged on the support (4) in such a way that the outer face of each gripping element (9) always bears against the said guide during the rising and descending movement of the gripping element and that the protrusion of the gripping element meets the said guide at the end of the descending movement of the gripping element and moves the free end of the latter closer to the free end of the associated gripping element.

3. Device according to Claim 1 or 2, characterised in that each gripping element consists of a blade.

4. Device according to Claim 3, characterised in that each blade is tapered at its free end.

5. Device according to Claim 4, characterised in that the two blades are connected to a common mounting.

6. Device according to Claim 2, characterised in that each gripping element consists of an elastic material and bears elastically against the said outer guide.

7. Device according to Claim 2, characterised in that each gripping element consists of a rigid material and has, on the inside, a recess at the location of the said protrusion, in that an articulation (10, 11) is provided between each gripping element and the manoeuvring means (6), and in that the guide means furthermore comprise an inner fixed guide (15) arranged on the support (4) in such a way that the inner face of each gripping element always bears against the said inner guide.

8. Device according to any one of the preceding claims, characterised in that it comprises a guard plate (16) covering the guide means (14, 15).

# FIG. 1

# FIG. 2

FIG. 3